# EUROPEAN PATENT APPLICATION

(11) **EP 3 745 178 A1**
(43) Date of publication of application: **02.12.2020**
(21) Application number: 20177239.9
(22) Date of filing: 28.05.2020
(51) Int. Cl.: G02B 6/44, G02B 6/38

(54) **EXPANDABLE FIBER OPTIC PATCH PANEL**

(30) Priority: 30.05.2019 US 201962854633 P
(71) Applicant: Corning Research & Development Corporation, Corning, New York 14831 (US)
(72) Inventor: RUDA, Michal, 95-060 Brzeziny (PL)
(74) Representative: Reeve, Nicholas Edward

(57) **Abstract**

A fiber optic patch panel (200) assembly is provided including an attachment body (102) including a plurality of fiber sockets (105) arranged in a first row of fiber sockets and a plurality of extension arms (201) each coupled to a respective fiber socket in the first row of fiber sockets, wherein each extension arm comprises a proximal portion (202) and a distal portion (210), a socket connector (104) disposed on the proximal portion for removably coupling the extension arm to the respective fiber socket, and a fiber optic adapter (108) disposed on the distal portion for mating together pairs of fiber optic connectors (106, 110). The socket connector of each extension arm defines a passage (206) for allowing an optical fiber (101) to pass therethrough, and laterally-adjacent extension arms of the plurality of extension arms have different configurations so that the distal portions of the laterally-adjacent extension arms are vertically offset from each other.

## Description

### PRIORITY APPLICATION

This application claims the benefit of priority of U.S. Provisional Application No. 62/854,633, filed on May 30, 2019, the content of which is relied upon and incorporated herein by reference in its entirety.

### FIELD

This disclosure generally pertains to fiber optic assemblies, and more particularly to an expandable fiber optic patch panel.

### BACKGROUND

In fiber optic networks, fiber optic cables and optical fibers may be spliced and output to a patch field for connection to other fiber optic assemblies. In some typical splice assemblies, a cable including a plurality of optical fibers may enter the splicing assembly and a plurality of optical fiber pigtails may exit the splicing assembly. Each of the optical fiber pigtails may include an optical fiber patch connector that may be supplied to a patch connector tray or other optical fiber terminal. Increases in demand for fiber optic communication may lead to increased fiber density with a corresponding increase in number of splice connections, patch connectors, etc., which may exceed the capacity of the allotted volume for the splice assembly and/or the patch connector field.

### SUMMARY

Typical fiber optic splice assemblies may include a relatively small housing to encapsulate the slice connections. However, these housing may be too small to accommodate a patch panel. As such, optical fiber pigtails are routed from the housing to a remote patch panel. The optical fibers of the pigtails may have an increased susceptibility to damage than an optical fiber routed inside of a housing. Further, routing optical fibers through pigtails to a remote patch panel increases the total volume occupied by the splice assembly.

In an example embodiment, an expandable patch panel assembly is provided. The patch panel assembly may include an attachment body, configured to be coupled to a housing of a splice assembly. The attachment body may include a row of fiber sockets. The patch panel assembly may also include a plurality extension arms, each having a socket connector disposed at a proximal portion and a fiber optic connector disposed at a distal portion. Laterally-adjacent extension arms of the plurality of extension arms may have different configurations so that the proximal portions of the laterally adjacent extension arms are vertically offset from each other when installed in the fiber sockets. This arrangement may allow a patch panel to be created in direct connection to the splice assembly housing reducing the volume needed for the splice assembly and increasing the structural security of the optical fibers by eliminating the need for routing pigtails to a remote patch panel. The patch panel may be expanded, as desired, by connecting further extension arm in an alternating fashion. In this manner, two or more rows of fiber optic patch connectors are formed.

In an example embodiment, the attachment body may include two rows of fiber sockets and the extension arms may include straight and angled extension arms. A pair of straight extension arms may be connected to corresponding sockets in the first and second rows in opposing directions and a pair of angled extension arms may be connected to corresponding sockets in the first and second rows adjacent to the straight extension arms. Two rows of optical fiber patch connectors are formed by the straight extension arms extending substantially straight out and away from the housing. Two more rows, one above and one below the straight extension arms, are formed by the angled extension arms. The width of the fiber optic connectors may be approximately twice the width of the socket connectors, such that the rows of fiber connectors are disposed in contact, or nearly in contact, with the adjacent fiber optic connectors, which may increase the lateral strength of the extension arms.

Additional features and advantages will be set forth in the detailed description which follows, and in part will be apparent to those skilled in the art from the description or recognized by practicing the embodiments as described in the written description and claims hereof, as well as the appended drawings.

It is to be understood that both the foregoing general description and the following detailed description are merely exemplary, and are intended to provide an overview or framework to understand the nature and character of the claims.

The accompanying drawings are included to provide a further understanding, and are incorporated in and constitute a part of this specification. The drawings are illustrative of selected aspects of the present description, and together with the specification explain principles and operation of methods, products, and compositions embraced by the present description. Features shown in the drawing are illustrative of selected embodiments of the present description and are not necessarily depicted in proper scale.

### BRIEF DESCRIPTION OF THE DRAWINGS

While the specification concludes with claims particularly pointing out and distinctly claiming the subject matter of the written description, it is believed that the specification will be better understood from the following written description when taken in conjunction with the accompanying drawings, wherein:
FIG. 1 illustrates a perspective view of fiber optic splice assembly including an expandable fiber optic patch panel according to an example embodiment;
FIG. 2 illustrates an exploded view of the expandable fiber optic patch panel according to an example embodiment;
FIG. 3 illustrates a side view of straight extension arms connected to an attachment body according to an example embodiment;
FIG. 4 illustrates a side view of angled extension arms connected to the attachment body according to an example embodiment;
FIG. 5 illustrates a front view of the expandable fiber optic patch panel have one set of straight extension arms and one set of angled extension arms connected to the attachment body according to an example embodiment;
FIG. 6 illustrates a front view of the expandable fiber optic patch panel have multiple sets of straight extension arms and multiple sets of angled extension arms connected to the attachment body according to an example embodiment;
FIGS. 7A-7C respectively illustrate a front perspective, a rear perspective, and a side view of a straight extension arm according to an example embodiment; and
FIGS. 8A-8C respectively illustrate a front perspective, a rear perspective, and a side view of an angled extension arm according to an example embodiment.

The embodiments set forth in the drawings are illustrative in nature and not intended to be limiting of the scope of the detailed description or claims. Whenever possible, the same reference numeral will be used throughout the drawings to refer to the same or like feature. The drawings are not necessarily to scale for ease of illustration an explanation.

### DETAILED DESCRIPTION

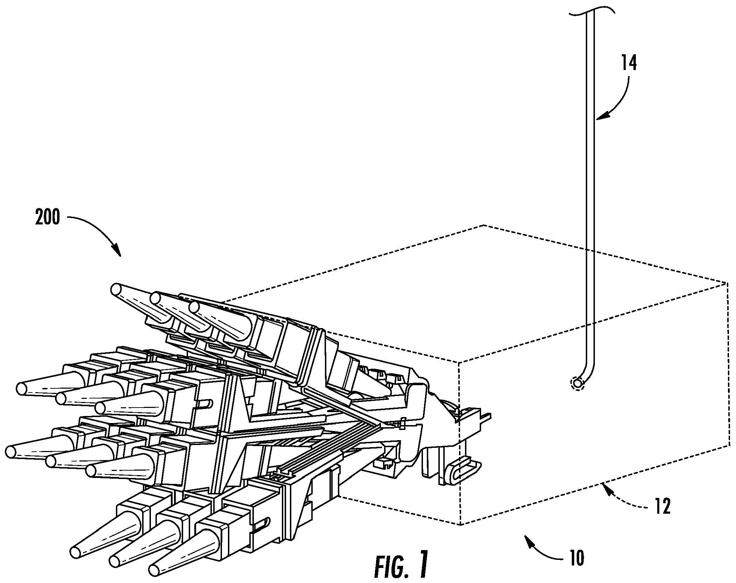

FIG. 1 illustrates a perspective view of fiber optic splice assembly 10 including an expandable fiber optic patch panel 200 according to an example embodiment. The fiber optic splice assembly 10 may include a housing 12 formed from metal, plastic, or other suitable material. The fiber optic splice assembly 10 may enable transition from a fiber optic cable input 14, to a patch panel connector output. The fiber optic cable input 14 may enter the housing 12 and so that one or more optical fibers (not shown) carried by the fiber optic cable input can be spliced optical fibers (also not shown) whose opposite ends are terminated with patch panel connectors 106. In an example embodiment, the fiber optic splice assembly 10 may include an expandable fiber optic patch panel 200 for supporting and organizing the patch panel connectors 106, and for facilitating optical connections to other fiber optic connectors 110. For convenience, the patch panel connectors 106 will be referred to in this disclosure simply as "fiber optic connectors 106," and the fiber optic connectors 110 will be referred to as "external fiber optic connectors 110." Advantageously, the fiber optic patch panel 200 may enable patch connections to the fiber optic splice assembly 10 without exposed pigtails. In other words, the fiber optic patch panel 200 is integral to the housing 12 eliminating a need to route pigtail cables between the housing 12 and a remote patch panel. The fiber optic patch panel 200 is described in further detail below.

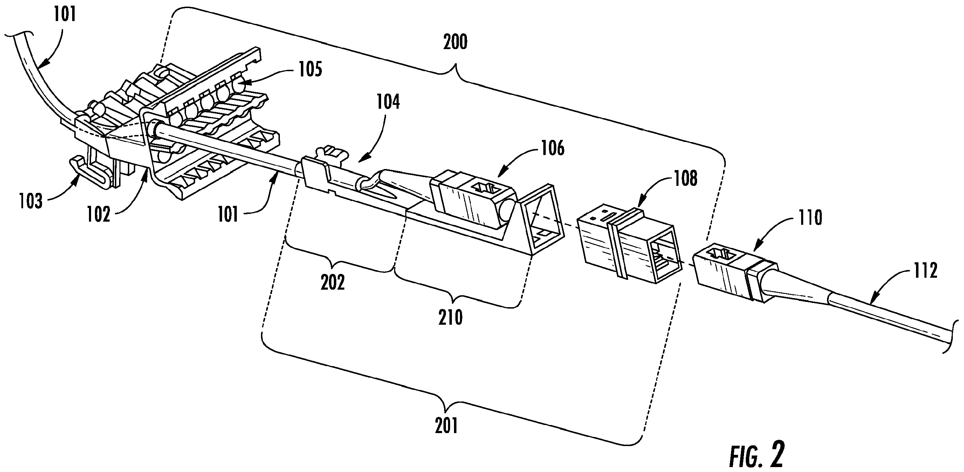

FIG. 2 illustrates an exploded view of the expandable fiber optic patch panel 200 according to an example embodiment. The fiber optic patch panel 200 may enable a fiber optic patch connection between an optical fiber originating at a splice connection within the fiber optic splice assembly 10 (FIG. 1) and an optical fiber of a patch cord or other cable assembly 112. In FIG. 2, a representative output cable 101 is illustrated as extending from behind the fiber optic patch panel 200, through a portion of the fiber optic patch panel 200, and onto an extension arm 201 (to be discussed in greater detail below). For convenience, the optical fiber carried by the output cable 101 will be referred to as an "output optical fiber," and reference number 101 will be used to refer to either the output cable or the output optical fiber. Indeed, in some embodiments, and even subsequent figures, the output optical fiber 101 may be unjacketed in contrast to the rather thicker, conventional cable.

Referring to both FIGS. 1 and 2, in an example embodiment, the expandable fiber optic patch panel 200 may include an attachment body 102 configured to be coupled to the housing 12. The housing 12 may include an aperture configured to receive the attachment body 102 therein. The housing 12 and/or the attachment body 102 may include one or more connector features 103 configured to retain the attachment body 102 to the housing 12. For example, the attachment body 102, or housing 12, may include one or more tabs, clips, screws, or other suitable connector features 103. The attachment body 102 may include one or more rows of fiber sockets 105 arranged as an array. The fiber sockets 105 may be configured to have an output optical fiber 101 pass therethrough and to receive an extension arm 201. Although only one extension arm 201 is shown in FIG. 2, a plurality of extension arms 201 may be provided (e.g., one for each of the fiber sockets 105), as will be described in greater detail below. In some example embodiments, the attachment body 102 and/or the extension arms 201 may be formed from metal, plastic, or other suitable material. In an example embodiment, the attachment body 102 and the extension arms 201 are formed from molded plastic via injection molding.

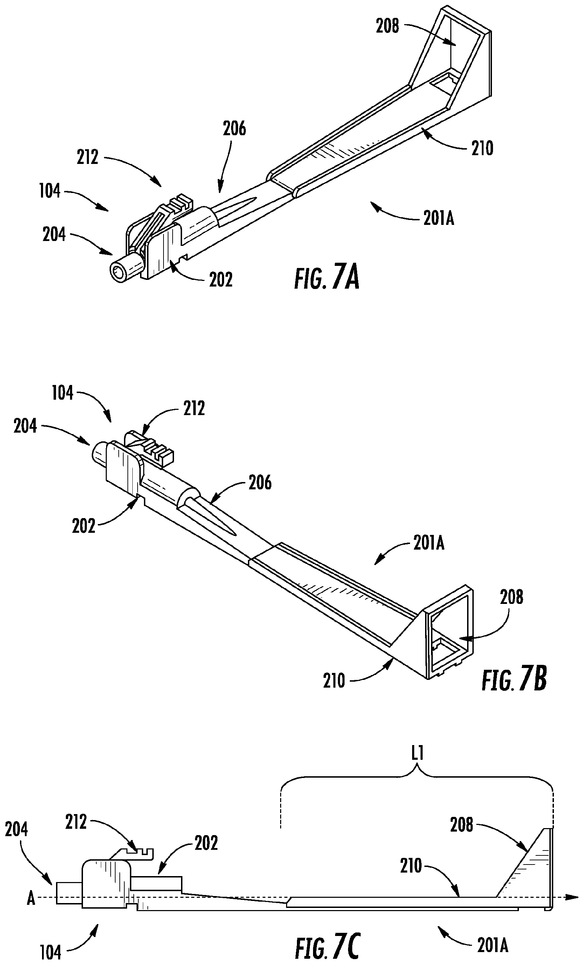

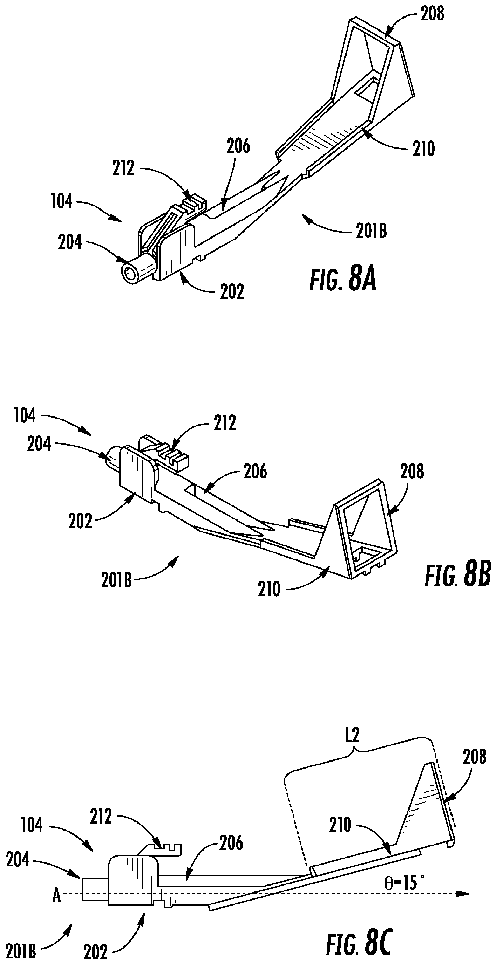

The extension arm 201 may include a socket connector 104 disposed at a proximal portion 202 and a fiber optic adapter 108 disposed at a distal portion 210. The socket connector 104 may be configured to be inserted into a fiber socket 105. The fiber socket 105 and/or the socket connector 104 may include one or more retaining features configured to retain the socket connector 104 in the fiber socket 105. For example, the fiber socket 105 or socket connector 104 may include one or more tabs, clips, or the like, as discussed below in reference to FIGS. 7A-7C and 8A-8C.

A fiber optic connector 106 may be supported on the extension arm 201. More specifically, the fiber optic connector 106 may be mated / coupled to one side of the fiber optic adapter 108. An external fiber optic connector 110 of a cable assembly 112 may be mated / coupled to an opposite side of the fiber optic adapter 108, such that the fiber optic adapter 108 may be used to couple the fiber optic connector 106 to the external fiber optic connector 110. The fiber optic connector 106, fiber optic adapter 108, and/or the external fiber optic connector 110 may include one or more connection features, such as latches, clips, tabs, or the like and/or or may be configured for an interference or friction fit. The connection features and/or the friction fit may cause the fiber optic connector 106 to maintain an optical connection with external fiber optic connector 110 via the fiber optic adapter 108.

The width of the fiber optic connector 106 may be approximately twice the width of the fiber socket 105 and/or socket connectors 104. As such, laterally-adjacent extension arms 201 may have different configurations so that the proximal portions of the laterally-adjacent extension arms are vertically offset from each other, thereby creating multiple rows of fiber optic patch connectors.

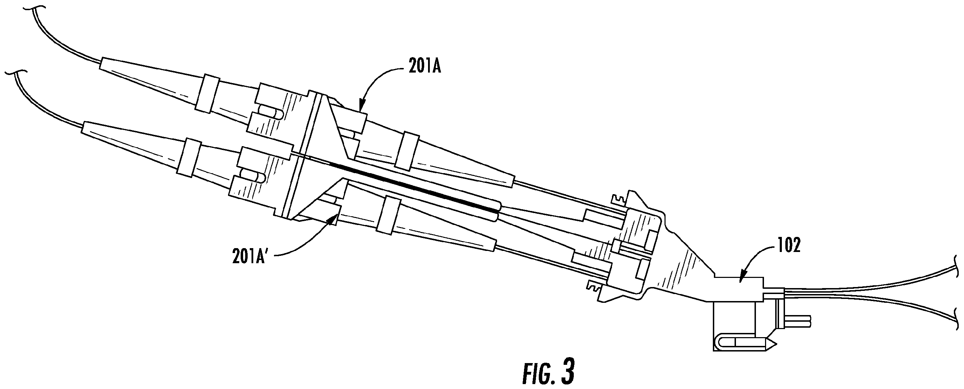

In an example embodiment, the extension arms 201 may be formed in a straight extension arm 201A configuration and an angled extension arm 201B configuration, as shown in FIGS. 3-8C. By alternating the pairs of straight extension arms 201A and angled extension arms 201B, the fiber optic splice assembly 10 may accommodate a direct connect patch panel in a relatively small volume, as described below. The attachment body 102 described below includes an array of two rows of fiber sockets 105 for illustrative purposes. One of ordinary skill in the art would immediately appreciate that the attachment body 102 may include a single row or multiple rows of fiber sockets 105.

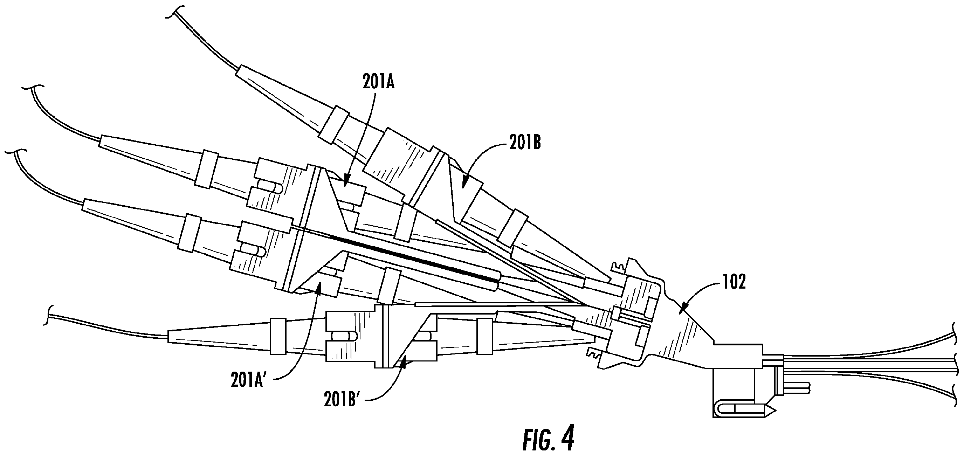

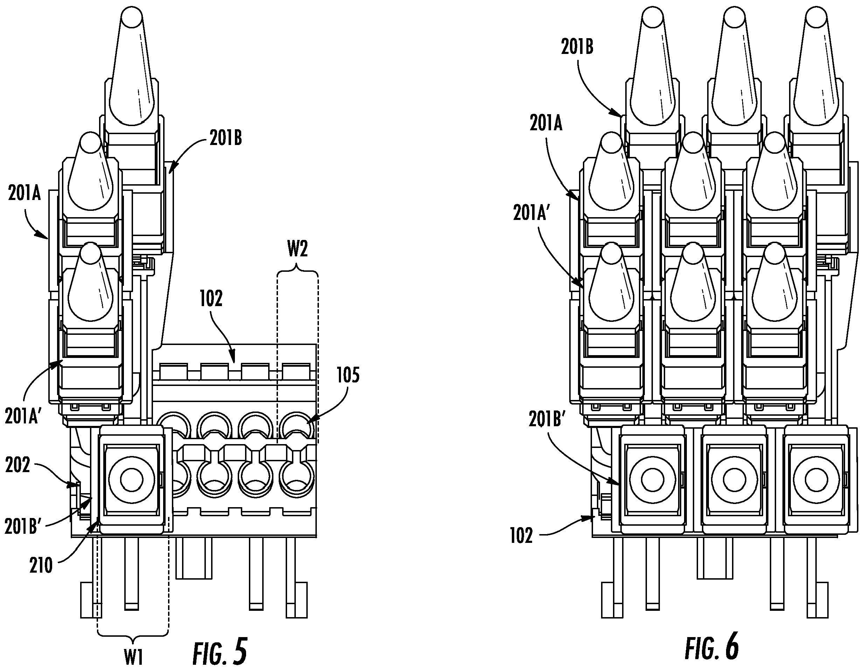

FIG. 3 illustrates a side view of straight extension arms 201A connected to an attachment body 102 according to an example embodiment. A first straight extension arm 201A and a second straight extension arm 201A' are oriented in opposite directions and connected to a first set of corresponding fiber sockets 105. In FIGS. 4 and 5, angled extension arms 201B, 201B' are connected to the attachment body 102 in addition to the straight extension arms 201A. Similar to the straight extension arms 201A, the angled extension arms 201B, 201B' are oriented in opposite directions and connected to a second set of corresponding fiber sockets 105, adjacent to the first set of corresponding fiber sockets 105. Additional pairs of straight extension arms 201A, 201A' and angled extension arms 201B, 201B' may be connected to sets of corresponding fiber sockets 105 of the attachment body 102 in an alternating fashion, as shown in FIG. 6, forming four rows of fiber optic patch panel connections. The adjacent straight extension arms 201A, 201A' may be positioned proximate to, or abut, each other. Similarly, the angled extension arms 201B, 201B' may be positioned proximate to, or abut, each other. This configuration may provide lateral support between the extension arms 201. As shown in FIG. 6 the angled extension arms 201B, 201B' may overlap approximately half of two adjacent straight extension arms 201A'. The alternating straight extension arms 201A and angled extension arms 201B may provide a compact patch panel in direct connection with the housing 12. Further, no external pigtails are needed increasing the durability of the fiber optic splice assembly 10 compared to typical splice assemblies.

FIGS. 7A-7C illustrate further details of the straight extension arms 201A according to an example embodiment. FIGS. 8A-8C illustrate further details of the angled extension arms 201B according to an example embodiment. The extension arms 201A, 201B may include a proximal portion 202 and a distal portion 210. The socket connector 104 is disposed at the proximal portion 202 and the fiber optic connector 106 (FIG. 2) is disposed at the distal portion 210. The proximal portion 202 and distal portion 210 of the straight extension arm 201A may be disposed in substantially the same plane, e.g. a connector plane A. The connector plane A may be defined by the socket connector, such as a straight horizontal extension from the socket connector 104, as illustrated in FIGS. 7C and 8C. The distal portion 210 of the angled extension arm 201B may be disposed at an angle θ, e.g. a vertical offset, out of the connector plane A. The connector plane A may be defined by the socket connector, such as a straight horizontal extension from the socket connector 104. In an example embodiment, the angle θ may be approximately 10-50 degrees, 10-20 degrees, 20-30 degrees, 30-40 degrees 40-50 degrees, 10-15 degrees, 15-20 degrees, 20-25 degrees, 25-30 degrees, 30-35 degrees, 35-40 degrees, 40-45 degrees, 45-50 degrees. In some example embodiments, the angle θ may be approximately 15 degrees. The angle θ may enable the fiber optic connectors 106 of the angled extension arms 201B, 201B' to be disposed in a row that is proximate, but not in interference with, the fiber optic connectors 106 of the straight extension arms 201A, 201A', as discussed above with reference to FIGS. 5 and 6.

As shown in FIG. 5, the width W1 of the distal portion 210 of the extension arms 201, may be approximately twice the width W2 of the proximal portion 202(indicated in reference to a fiber socket 105 for clarity), such that the width W2 at the proximal portion 202 accommodates connection to the fiber sockets 105 and the width W1 of the distal portion 210 accommodates the fiber optic connectors 106. Turning back to FIGS. 7A-7C and 8A-8C, the length L1 of the distal portion 210 of straight extension arms 201A may be longer that the length L2 of the distal portion 210 of the angled extension arms 201B. The length L1 of the distal portion 210 of the straight extension arms 201A being longer than the length L2 of the distal portion 210 of the angled extension arms 201B may provide a desirable positioning of the rows of fiber optic connectors 106 of the expandable fiber optic patch panel 200, enabling accessibility while minimizing the volume occupied, as shown in FIG. 4.

The straight extension arms 201A may have substantially the same general configuration as the angled extension arms 201B, with the exception of the length of the extension arms and the angle between the proximal and distal portions, as discussed above. As such the general configuration of the extension arms 201A, 201B is discussed together below with reference to FIGS. 7A-8C. The extension arms 201A, 201B may include a passage or fiber feed through channel 206 configured to receive an optical fiber therethrough. The fiber feed through channel 206 may be disposed between the socket connector 104 and a point along the proximal portion 202 of the extension arm 201A, 201B at which the fiber optic adapter 108 (FIG. 2) is disposed. The fiber feed through channel 206 may extend through the socket connector 104 enabling the output optical fiber 101 to pass therethrough. In some example embodiments, at least a portion of the fiber optic connector 106, such as a boot, may extend into the fiber feed through channel 206, such that the output optical fiber 101 is not exposed between the fiber optic splice assembly 10 and the fiber optic connector 106.

In an example embodiment, the socket connector 104 may include a positioning sleeve 204 extending outward an away from the proximal portion 202 of the straight extension arm 201A or the angled extension arm 201B. The outer shape of the positioning sleeve 204 may be complementary to the fiber socket 105, such as cylindrical, pentagonal, hexagonal, or other suitable shape. The positioning sleeve 204 may be configured to align the socket connector 104 in a fiber socket 105 of the attachment body 102. The fiber feed through channel 206 may extend through the positioning sleeve 204 enabling the output optical fiber 101 (FIG. 2) to pass therethrough. Additionally or alternatively, the socket connector 104 may include a retaining feature 212 configured to retain the straight extension arm 201A or the angled extension arm 201B engaged with a fiber socket 105 of the attachment body. As discussed above in reference to FIG. 2, the retaining feature 212 may include, without limitation, one or more latches, tabs, clips, or the like.

In an example embodiment, the straight extension arms 201A or the angled extension arms 201B may include an adapter window 208 disposed at the distal portion 210 and configured to retain a fiber optic adapter 108 (FIG. 2). The fiber optic adapter 108 may be coupled to the adapter window 208 by one or more connection features, such as clips or tabs, or may have an interference or friction fit within the adapter window 208. The fiber optic connector 106 and external fiber optic connector 110 may then be connected to either end of the adapter window 208.

The fiber optic patch panel as described herein enables a splice connection assembly to occupy a considerably smaller volume than conventional splice connection assemblies that provide a comparable number of connections, and enables the splice connection assembly to expand as desired. Additionally, the optical fibers of the splice connection assembly may be significantly more protected due to the direct connection to the housing, eliminating the need for externally routed pigtails.

In an example embodiment, a fiber optic patch panel assembly is provided including an attachment body comprising a plurality of fiber sockets arranged in a first row of fiber sockets and a plurality of extension arms each coupled to a respective fiber socket in the first row of fiber sockets. Each extension arm comprises a proximal portion and a distal portion, a socket connector disposed on the proximal portion for removably coupling the extension arm to the respective fiber socket, and a fiber optic adapter disposed on the distal portion for mating together pairs of fiber optic connectors. The socket connector of each extension arm defines a passage for allowing an optical fiber to pass therethrough and wherein laterally-adjacent extension arms of the plurality of extension arms have different configurations so that the proximal portions of the laterally adjacent extension arms are vertically offset from each other.

In an example embodiment, the plurality of extension arms include a plurality of straight extension arms and a plurality of angled extension arms. Both the distal portions and the proximal portions of the straight extension arms are disposed in the substantially the same plane and the distal portions of the angled extension arms are disposed at an angle out of a connector plane defined by the socket connector. In some example embodiments, the attachment body further comprises a second row of fiber sockets arranged in an array with the first row of fiber sockets. A first straight extension arm and a second straight extension arm of the plurality of straight extension arms are coupled in opposing orientations to first corresponding fiber sockets in the first row of sockets and second row of sockets. A first angled extension arm and a second angled extension arm of the plurality of angled extension arms are coupled in opposing orientations to second corresponding fiber sockets in the first row of sockets and second row of sockets and the first corresponding sockets and the second corresponding sockets are disposed adjacent to each other. In an example embodiment the angle is approximately 15 degrees. In some example embodiments, each of the connectors has a width that is approximately half of a width of each of the fiber optic connectors. In an example embodiment, each of the socket connectors includes a retaining feature configured to retain the corresponding extension arm engaged with the respective fiber socket of the plurality of fiber sockets. In some example embodiments, each of the socket connectors includes a positioning sleeve extending outward and away from the proximal portion of the corresponding extension arm and the positioning sleeve is configured to align the socket connector in of the respective fiber socket to which the corresponding extension arm is coupled. In an example embodiment, the plurality of extension arms each also include an adapter window disposed at the distal portion of the extension arm and the adapter window and retains the fiber optic adapter on the distal portion of the extension arm. In some example embodiments, the attachment body include one or more housing connection features configured to retain the attachment body in connection with a housing of a fiber optic component. In some example embodiments, the plurality of extension arms are formed of molded plastic. In an example embodiment a fiber optic splice assembly is providing including one or more of the features described above.

It will be apparent to those skilled in the art that various modifications and variations can be made without departing from the spirit or scope of the illustrated embodiments. Since modifications, combinations, sub-combinations and variations of the disclosed embodiments that incorporate the spirit and substance of the illustrated embodiments may occur to persons skilled in the art, the description should be construed to include everything within the scope of the appended claims and their equivalents.

## Claims

1. A fiber optic patch panel assembly comprising:
an attachment body comprising a first row of fiber sockets; and
a plurality of extension arms each coupled to a respective fiber socket in the first row of fiber sockets, wherein each extension arm comprises a proximal portion and a distal portion, a socket connector disposed on the proximal portion for removably coupling the extension arm to the respective fiber socket, and a fiber optic adapter disposed on the distal portion for mating together pairs of fiber optic connectors;
wherein the socket connector of each extension arm defines a passage for allowing an optical fiber to pass therethrough; and
wherein laterally-adjacent extension arms of the plurality of extension arms have different configurations so that the distal portions of the laterally-adjacent extension arms have a vertical offset relative to each other.

2. The fiber optic patch panel assembly of claim 1, wherein the plurality of extension arms comprises a plurality of straight extension arms and a plurality of angled extension arms, wherein both the distal portions and the proximal portions of the straight extension arms are disposed in substantially the same plane, and wherein the distal portions of the angled extension arms are disposed at an angle out of a connector plane defined by the socket connector.

3. The fiber optic patch panel assembly of claim 2, wherein:
the attachment body further comprises a second row of fiber sockets arranged in an array with the first row of fiber sockets;
a first straight extension arm and a second straight extension arm of the plurality of straight extension arms are coupled in opposing orientations to first corresponding fiber sockets in the first row of sockets and the second row of sockets;
a first angled extension arm and a second angled extension arm of the plurality of angled extension arms are coupled in opposing orientations to second corresponding fiber sockets in the first row of sockets and the second row of sockets; and
the first corresponding sockets and the second corresponding sockets are disposed adjacent to each other.

4. The fiber optic patch panel assembly of claims 2 or 3, wherein the angle is approximately 15 degrees.

5. The fiber optic patch panel assembly of any of claims 1 - 4, wherein each of the socket connectors has a width that is approximately half of a width of each of the fiber optic connectors.

6. The fiber optic patch panel assembly of any of claims 1 - 5, wherein each of the socket connectors comprises a retaining feature configured to retain the corresponding extension arm with the respective fiber socket of the plurality of fiber sockets.

7. The fiber optic patch panel assembly of any of claims 1 - 6, wherein each of the socket connectors comprises a positioning sleeve extending outward and away from the proximal portion of the corresponding extension arm, and wherein the positioning sleeve is configured to align the socket connector in the respective fiber socket to which the corresponding extension arm is coupled.

8. The fiber optic patch panel assembly of any of claims 1 - 7, wherein the plurality of extension arms each further comprise:
an adapter window disposed at the distal portion of the extension arm, wherein the adapter window retains the fiber optic adapter on the distal portion of the extension arm.

9. The fiber optic patch assembly of any of claims 1 - 8, wherein the attachment body comprises one or more housing connection features configured to retain the attachment body in connection with a housing of a fiber optic component.

10. The fiber optic patch assembly of any of claims 1 - 9, wherein the plurality of extension arms are formed of moulded plastic.

11. A fiber optic splice assembly comprising:
a housing configured to at least partially enclose a splice connection; and
a fiber optic patch panel assembly comprising:
an attachment body coupled to the housing and comprising a plurality of fiber sockets arranged in a first row of fiber sockets; and
a plurality of extension arms each coupled to a respective fiber socket in the first row of fiber sockets, wherein each extension arm comprises a proximal portion and a distal portion, a socket connector disposed on the proximal portion for removably coupling the extension arm to the respective fiber socket, and a fiber optic adapter disposed on the distal portion for mating together pairs of fiber optic connectors;
wherein the socket connector of each extension arm defines a passage for allowing an optical fiber to pass therethrough; and
wherein laterally-adjacent extension arms of the plurality of extension arms have different configurations so that the distal portions of the laterally-adjacent extension arms have a vertical offset relative to each other.

12. The fiber optic splice assembly of claim 11, wherein the plurality of extension arms comprise a plurality of straight extension arms and a plurality of angled extension arms, wherein both the distal portions and the proximal portions of the straight extension arms are disposed in substantially the same plane, and wherein the distal portions of the angled extension arms are disposed at an angle out of a connector plane defined by the socket connector.

13. The fiber optic splice assembly of claim 12, wherein:
the attachment body further comprises a second row of fiber sockets arranged in an array with the first row of fiber sockets;
a first straight extension arm and a second straight extension arm of the plurality of straight extension arms are coupled in opposing orientations to first corresponding fiber sockets in the first row of sockets and the second row of sockets;
a first angled extension arm and a second angled extension arm of the plurality of angled extension arms are coupled in opposing orientations to second corresponding fiber sockets in the first row of sockets and the second row of sockets; and
the first corresponding sockets and the second corresponding sockets are disposed adjacent to each other.

14. The fiber optic splice assembly of claims 12 or 13, wherein the angle is approximately 15 degrees.

15. The fiber optic splice assembly of any of claims 11 - 14, wherein each of the socket connectors has a width that is approximately half of a width of each of the fiber optic connectors.
